# EUROPEAN PATENT APPLICATION

(11) **EP 4 730 239 A1**
(43) Date of publication of application: **22.04.2026**
(21) Application number: 24207864.0
(22) Date of filing: 21.10.2024
(51) Int. Cl.: G06Q 10/0833, H04W 4/029

(54) **A METHOD AND A SYSTEM FOR SCHEDULING A TRACKING PROFILE OF AN ASSET WHILE THE ASSET IS TRANSPORTED FROM A FIRST LOCATION TO A SECOND LOCATION IN REAL TIME USING A LOGGER DEVICE ASSOCIATED TO THE ASSET**

(71) Applicant: Controlant hf., 201 Kopavogur (IS)
(72) Inventor: BJÖRNSSON, Hermann Ragnar, 201 Kopavogur (IS)
(74) Representative: Inspicos P/S

(57) **Abstract**

The present invention relates to a method and a system for scheduling a tracking profile of an asset while the asset is transported from a first location to a second location in real time using a logger device associated to the asset, comprising:
• a receiver for receiving a first location data indicating a first location of the logger device,
• a processor for utilizing the first location data for identifying a first geographical area in which the logger device is located,
• a memory having pre-stored first set of primary-level tracking-rules that are legally compliant for the first geographical area, and which define a communication pattern between the logger device and an external computer system during the real time tracking while the asset is transported from the first location to the second location,
wherein the processor is further configured to utilize the first location data for identifying the first set of primary-level tracking-rules that are legally compliant for the first geographical area.

## Description

### FIELD OF THE INVENTION

The present invention relates to a method and a system for scheduling a tracking profile of an asset while the asset is transported from a first location to a second location in real time using a logger device associated to the asset.

### BACKGROUND OF THE INVENTION

With the expansion and growth of global sourcing in the supply chain industry, more prevalent interest has been placed on automatic electronic monitoring of environment related parameters to increase food and drug safety and improve food defense systems throughout all areas of production, processing, storage, transportation, and operations. Food and pharmaceutical products require proper handling of environment related parameters such as temperature during transport to assure shelf quality, longevity, and safety.

Logger devices are electronic monitoring devices commonly used for these purposes and are configured to be associated to an asset such as a pharmaceutical product via a shipment-material such as a pallet or boxes to automatically monitor and record various environmental related parameters of the assets throughout the supply chain, such as temperature, humidity, acceleration, and air pressure, over time. This may be done by placing a logger device into a box preserving the asset or by placing a temperature sensor being a part of a logger device into the box or by incorporating a logger device into a pallet (e.g. via appropriate compartment integrated into the pallet). A recent example of importance of such logger devices is the temperature monitoring of the COVID-19 vaccines, which is a critical monitoring parameter.

Logger devices have a wireless communication module to allow them to transmit their positional data together with measured environmental related data of the asset wirelessly to an external control computer, hence, enabling a real time supply chain monitoring during the transport of the assets. This means that positional data of the logger device, and thus of the asset, together with measured environmental data such as the temperature of the assets are provided in real time. By doing so, it is possible to monitor the position and the environmental condition of the assets in real time. Thus, issues such as the temperature of the asset being too high or too low may be identified before these issues escalate which allows for proactive actions to prevent the assets from being damaged.

Mobile Country Code (MCC) is a unique identifier used to represent countries and specific regions in mobile communication networks. It is a part of the mobile network identification process and helps determine the country or region where a mobile device is registered or operating.

Countries have different regulations on data privacy and security, particularly when it comes to logger devices interacting with cloud services. Some countries enforce strict data protection laws that limit or prohibit the transmission and storage of data on cloud services, especially if those services are hosted outside their jurisdiction. These restrictions often stem from concerns about data sovereignty, privacy, and security.

In some countries with stricter regulations, logger devices may be required to collect, store, and process data locally without connecting to external cloud systems, in order to prevent unauthorized access or data breaches. Conversely, countries with more lenient regulations may permit these devices to interact freely with cloud services, enabling easier cross-border data sharing.

These differing regulatory environments pose challenges when transporting sensitive assets equipped with logger devices through various geographical regions with distinct Mobile Country Codes (MCCs), complicating real-time tracking across jurisdictions.

### SUMMARY OF THE INVENTION

It is an object of the invention to overcome the above-mentioned problems and provide a more efficient and sustainable solution for both real-time tracking fulfilling at the same time regulatory compliances.

In a first aspect of the invention, a method is provided of scheduling a tracking profile of an asset while the asset is transported from a first location to a second location in real time using a logger device associated to the asset, comprising:
- receiving a first location data indicating a first location of the logger device,
- processing the first location data for identifying a first geographical area in which the logger device is located, and
- identifying a first set of primary-level tracking-rules that are legally compliant for the first geographical area, where the first set of primary-level tracking-rules define communication pattern between the logger device and an external computer system during the real time tracking while the asset is transported from the first location to the second location.

Accordingly, a method is provided that enables dynamically adapting to the data privacy and security regulations of each geographical region the asset passes through by utilizing a rule engine or similar means that activates region-specific tracking rules based on the logger device's location. The first location data may be Mobile Country Code (MCC) that is transmitted by a cellular tower and where the first location data is the location of the cellular tower. The first location data may also be a position data determined via cellular triangulation where the logger device is located.

The term tracking may according to the present invention include tracking location tracking of the of the asset, or location tracking and tracking of at least one environment related parameter of the asset measured by the logger device such as temperature, humidity, shock, acceleration, air pressure, just to mention few.

In an embodiment, the logger device comprises a memory having a pre-stored default tracking-rules, where the method further comprises, prior to the start of the real time monitoring:
- comparing the first identified tracking rules with the pre-stored default tracking-rules, where in case of a non-match,
- adjusting the pre-stored default tracking rules such that they match with the first set of primary-level tracking-rules that are legally compliant for the first geographical area.

In that way, it is possible to verify that the logger device is functioning correctly, particularly in the context of ensuring compliance with regulations concerning Personal Identifiable Information (PII). This is crucial for maintaining data privacy standards and ensuring the proper handling and security of sensitive information. This includes information such as names, email addresses, and location data. In regulatory contexts, particularly under General Data Protection Regulation (GDPR), the handling of PII is critical, as improper processing can lead to legal issues.

In an embodiment, the step of processing the first location data comprises determining if the logger device is within a pre-defined geofence, where the step of identifying the first set of primary-level tracking-rules is performed if the logger device is determined to be within the pre-defined geofence. The geofence may as an example be country border, county boundaries etc..

In an embodiment, the steps of receiving, processing and identifying is performed at the logger device, or at the external control computer. The external control computer may include any type of computer platform that receives at least position related data from the logger device, where the location data may either directly be retrieved therefrom, or where the location may be determined via cellular triangulation.

In an embodiment, the method further comprises:
- receiving a second location data indicating a second location of the logger device,
- utilizing the second location data in identifying a second geographical area in which the logger device is located, where if the second geographical area is different from the first geographical area,
- identifying a second set of primary-level tracking-rules that are legally compliant for the second geographical area,
- comparing the first set of primary-level tracking-rules with the second set of primary-level tracking-rules, where in case of non-match
- dynamically updating the first set of primary-level tracking-rules to the second set of primary-level tracking-rules.

Accordingly, it is possible adapt the data privacy and security regulations of each geographical region the asset passes through via e.g. the received MCC by utilizing a rule engine or similar means that activates region-specific tracking rules based on the logger device's location. Thus, it may be ensured that when the asset together with the logger device enters e.g. country boarders that the privacy and security regulations of each geographical region the asset passes through will be dynamically adapting to the second geographical area.

In an embodiment, the method further comprises secondary-level tracking-rules that obey the primary-level tracking-rules and thus the tracking-rules that are legally compliant for the geographical area. This secondary-level tracking-rules may comprise customer specific tracking rules specified by the proprietor/customer or the nature of the asset. This may as an example include reducing tracking resolution when the logger device is within a pre-defined geofence, or stopping the tracking when the logger device is within a pre-defined geofence.

In an embodiment, the secondary-level tracking-rules comprise customer specific tracking rules specified by the proprietor/customer or the nature of the asset, where the secondary-level tracking rules include:
- reducing tracking resolution when the logger device is within a pre-defined geofence around the second location, or
- stopping the tracking when the logger device is within a pre-defined geofence around the second location.

This could as an example be the scenario where pharmaceutical product is distributed to pharmacy and hospital, where the real time tracking takes place and remains according to the primary-level tracking-rules.

A geofence may be defined around the pharmacy. When a patient buys a packaging of the pharmaceutical product and leaves the geofence, an event may be triggered stating that the tracking shall be stopped. Accordingly, this event applies a Point of Consumption (PoC) event, since it is only a matter of minutes, hours, or days until the pharmaceutical products will be consumed.

In case of the hospital, the event may be triggered when a packaging is opened or removed from a safety area, via e.g. geofence as discussed above.

The primary-level tracking-rules that are legally compliant for the geographical area may as an example include the following rules:
no data may be processed, e.g. temperature/humidity/shock etc. may not be measured and stored in the logger device,
data may be collected if an event is detected, where the event may as an example be an opening event detected by a light detector, or shock event, or temperature increase/decrease from a reference value or range, just to mention few examples,
data may be processed and/or collected if an event, e.g. similar to the event above, is detected during the real time monitoring where the data may be transmitted to an external computer system,
data may be processed and/or collected if an event, e.g. similar to the event above, is detected during the real time monitoring and the country code and/or jurisdiction code, where the data may be transmitted to an external computer system,
data may be processed and/or collected if an event, e.g. similar to the event above, is detected during the real time monitoring and the country code and/or jurisdiction code and a single cell tower ID, where the data may be transmitted to an external computer system,
data may be processed and/or collected if an event, e.g. similar to the event above, is detected during the real time monitoring and the country code and/or jurisdiction code and a single cell tower ID and cell tower triangulation is allowed, where the data may be transmitted to an external computer system,
data may be processed and/or collected if an event, e.g. similar to the event above, is detected during the real time monitoring and the country code and/or jurisdiction code and a single cell tower ID and cell tower and Wi-Fi triangulation is allowed, where the data may be transmitted to an external computer system, and
data may be processed and/or collected if an event, e.g. similar to the event above, is detected during the real time monitoring and the country code and/or jurisdiction code and a single cell tower ID and cell tower and Wi-Fi triangulation is allowed and GPS coordinated, where the data may be transmitted to an external computer system.

The above-mentioned geographical area may include:
- boarders defining country via a country code, and/or
- boarders defining region via a region code, and/or
- county borders, and/or
- state borders, and/or
- boarders defined via geofence, and/or
- boarders defined around a postcode.

In a second aspect of the invention a system is provided for scheduling a tracking profile of an asset while the asset is transported from a first location to a second location in real time using a logger device associated to the asset, comprising:
- a receiver for receiving a first location data indicating a first location of the logger device,
- a processor for utilizing the first location data for identifying a first geographical area in which the logger device is located,
- a memory having pre-stored first set of primary-level tracking-rules that are legally compliant for the first geographical area, and which define a communication pattern between the logger device and an external computer system during the real time tracking while the asset is transported from the first location to the second location,
wherein the processor is further configured to utilize the first location data for identifying the first set of primary-level tracking-rules that are legally compliant for the first geographical area.

Accordingly, a system is provided that allows for seamless tracking of assets while ensuring compliance with local data protection laws, including restrictions on data transmission to cloud services, thus facilitating uninterrupted monitoring and secure data handling during the transportation of sensitive assets.

The power source may include Nickel-metal hydride (NiMH) battery or lithium battery which may be rechargeable.

The logger device may also be a so-called IoT logger device, sometimes referred to as a smart logger, which is few millimeters of thickness, comprising a bendable battery which thickness is within millimeters range, comprising processor and a communication module arranged on a Printed Circuit Board (PCB). The bendable battery may be a zinc-core battery that is electrically connected to the PCB.

In an embodiment, the receiver, the memory and the processor are comprised in the logger device, and where the location data is transmitted from a cellular tower that is closest to the logger device.

In another embodiment, the receiver, the processor and the memory are comprised in the external computer system, which may be seen as any type of a computer platform, where the external computer system further comprises a transmitter for transmitting the identified first set of primary-level tracking-rules to the logger device. Accordingly, the processing steps may be performed at the computer system side, meaning that the logger device may be simplified, e.g. with processor with less processing power and/or more basic memory. The processor may further be configured to operate the transmitter and the memory in accordance with the primary-level tracking-rules that are legally compliant for the first geographical area. Thus, the logger device may accordingly be configured to transmit data, i.e. position data and on a regular basis, e.g. every 1 hour, to the external computer system, where the above-mentioned method steps are performed. This may as an example include not storing any data at the external control computer and/or or deleting stored data, not to transmit data to the logger device, if the primary-level tracking-rules state that no data accumulation may take place.

In an embodiment, the memory further has stored therein a secondary-level tracking-rules that obey the primary-level tracking-rules and thus the tracking-rules that are legally compliant for the geographical area within which the logger device is located. The memory further has stored therein a pre-defined geofence boundaries each of which have associated secondary-level tracking-rule selected from the secondary-level tracking-rules, where the processor is further configured to, if the first location data is within the pre-defined geofence boundary selected from the pre-defined geofence boundaries, activate the associated secondary-level tracking-rule. This may as an example be a scenario where the asset is being transported within the supply chain, e.g. within a given country, and when the asset enters e.g. a certain postal code, the tracking of the asset is reduced, limited or even stopped in this last mile distribution of the asset. This might as an example trigger a command at the external

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 shows a system according to the present invention for scheduling a tracking profile of an asset while the asset is transported by a transport vehicle from a first location to a second location in real time using a logger device associated to the asset,
Figure 2 shows a flowchart of a method according to the present invention, and
Figure 3 depicts an additional embodiment of the system discussed in figure 1.

### DESCRIPTION OF EMBODIMENTS

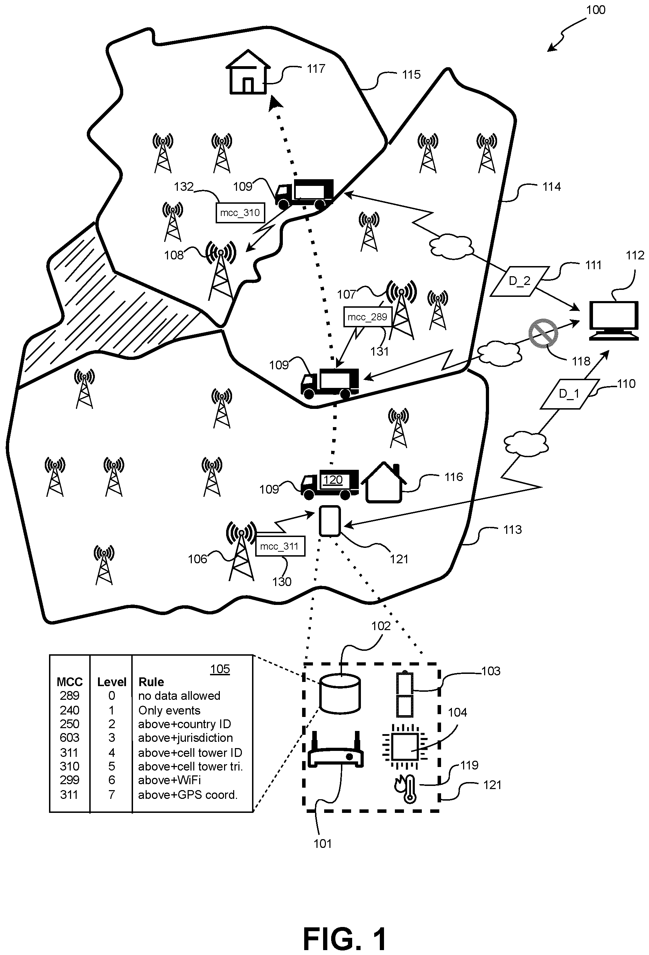

Figure 1 shows a system 100 according to the present invention for scheduling a tracking profile of an asset 120 while the asset is transported by a transport vehicle 109 from a first location 116 to a second location 117 in real time using a logger device 121 associated to the asset, which may be attaching the logger device to the asset, placing the logger device into the packaging containing the package, or by locating the logger device within the vehicle where the asset is kept. The transport means may include one or more of as an example: a vessel, aircraft, train, drone, truck etc..

The logger device 121 comprises a communication module 101, a memory 102 and a processor 104 for controlling the communication module and the memory 102. The communication module is configured to receive a first location data 130 from a cellular tower 106 indicating a first location of the logger device 121. The first location data is utilized by the processor to identify a first geographical area 113 in which the logger device is located in. This may as an example mean identifying in which country the logger device and the asset is located in.

In the embodiment shown here, the logger device 121 further comprises at least one sensor 119, which may be a temperature sensor, shock sensor, humidity sensor, pressure sensor, accelerometer, and a power source 103 for powering the logger device. The power source may include a bendable battery and the processor, and the communication module may be arranged on a Printed Circuit Board (PCB), where the battery may be a zinc-core battery that is electrically connected to the PCB. This makes the thickness of the logger device to be several millimetres thick.

The battery has pre-stored first set of primary-level tracking-rule table 105 that are legally compliant for the first geographical area, and which define a communication pattern between the logger device and an external computer system 112 during the real time tracking while the asset 120 is transported from the first location to the second location 117. The table 105 gives just simple hypothetical examples of different hypothetical MCC with different levels and rules.

The first location data is embedded in the Mobile Country Code (MCC) 130 (MCC-311) and in this example states that tracking of the logger device is allowed and data 110 may be communication to the external computer device 112. Accordingly, a real time monitoring is allowed in the first geographical area 113, where the logger device may communication on a regular basis, e.g. every 1 hour, to the external computer system 112, where location data together with measure environment related data 110 such as the temperature data are received, stored and presented in real time.

Upon arrival at a second geographical area 114 a different MCC 131 is received (MCC-289) from a nearest cellular tower 107, where MCC-289 e.g. stands for the rule that no data accumulation or transmission is allowed 118. Current primary-level tracking-rule stored in the memory 102 are updated and replaced by the new primary-level tracking-rule that are legally compliant for the second geographical area 114 and stored in the memory 102.

Upon arrival at a third geographical area 115 a different MCC 132 is received (MCC-310) from a nearest cellular tower 107, where MCC-289 stands for the rule that data measurement and/or position data 111 may be shared with the external control computer 112.

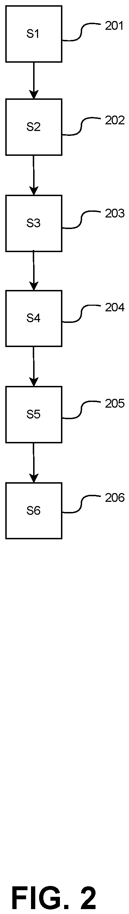

Figure 2 shown a flowchart of a method according to the present invention of scheduling a tracking profile of an asset while the asset is transported from a first location to a second location in real time using a logger device associated to the asset. The asset may as an example comprise any type of a sensitive product such as a pharmaceutical product, and where also environmental related parameters such as temperature, humidity, tilting angle, pressure, accelerate and the like may be monitored in real time.

In a first step (S1) 201, the logger device receives a first location data of the logger device from e.g. a cellular tower, where the data includes Mobile Country Code (MCC).

In a second step (S2) 202, the first location data is utilized in identifying a first geographical area in which the logger device is located.

In a third step (S3) 203, a first set of primary-level tracking-rules are identified that are legally compliant for the first geographical area, where the first set of primary-level tracking-rules define communication pattern between the logger device and an external computer system during the real time tracking while the asset is transported from the first location to the second location. The communication pattern may as an example include the frequency of which the logger device communicates with the external computer system by transmitting position data of the logger device and thus of the asset in real time. The data may also include environmental related data mentioned above.

In a fourth step (S4) 204, the method further comprises receiving, by the logger device, a second location data indicating a second location of the logger device. This is typically the case when the transport means that transports the asset is e.g. either close to boarders of another country, or county boarders, where MCC' is received from a cellular tower at the other side of the boarders.

In a fifth step (S5) 205, the second location data MCC' is utilized in identifying a second geographical area in which the logger device is located. If the second geographical area is different from the first geographical area, a second set of primary-level tracking-rules is identified that are legally compliant for the second geographical area.

In a sixth step (S6) 206 the first set of primary-level tracking-rules is compared with the second set of primary-level tracking-rules, where in case of non-match the first set of primary-level tracking-rules is dynamically updated to the second set of primary-level tracking-rules. This may as an example include the scenario discussed in relation to figure 2.

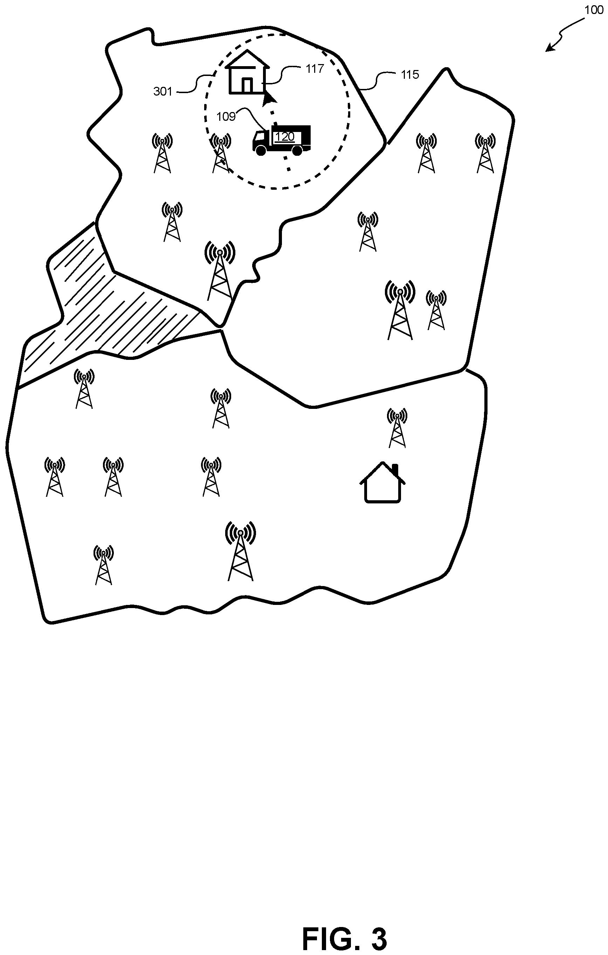

Figure 3 depicts an additional embodiment of the system 100 discussed in figure 1, where the memory of the logger device further has stored therein a secondary-level tracking-rules that obey the primary-level tracking-rules and thus the tracking-rules that are legally compliant for the geographical area 115 where the logger device is located. The secondary-level tracking-rules may be defined by the customer/purchaser/owner of the asset.

The processor is further configured to additionally activate these additional secondary-level tracking-rules when the logger device is within a pre-defined geofence 301 around the second location 117. This may as an example be a scenario where the asset is within a given postal address where the tracking of the asset is to be stopped.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of scheduling a tracking profile of an asset while the asset is transported from a first location to a second location in real time using a logger device associated to the asset, comprising:
• receiving a first location data indicating a first location of the logger device,
• processing the first location data for identifying a first geographical area in which the logger device is located, and
• identifying a first set of primary-level tracking-rules that are legally compliant for the first geographical area, where the first set of primary-level tracking-rules define communication pattern between the logger device and an external computer system during the real time tracking while the asset is transported from the first location to the second location.

2. The method according to claim 1, wherein the tracking profile comprises location tracking of the of the asset, or location tracking and tracking of at least one environment related parameter measured by the logger device.

3. The method according to claim 1 or 2, wherein the first location data is transmitted by a cellular tower and where the first location data is the location of the cellular tower.

4. The method according to any of the preceding claims, wherein the step of processing the first location data comprises determining if the logger device is within a pre-defined geofence, where the step of identifying the first set of primary-level tracking-rules is performed if the logger device is determined to be within the pre-defined geofence.

5. The method according to any of the preceding claims, wherein the steps of receiving, processing and identifying is performed at the logger device, or at the external control computer.

6. The method according to any of the preceding claims, further comprising:
• receiving a second location data indicating a second location of the logger device,
• utilizing the second location data in identifying a second geographical area in which the logger device is located, where if the second geographical area is different from the first geographical area,
• identifying a second set of primary-level tracking-rules that are legally compliant for the second geographical area,
• comparing the first set of primary-level tracking-rules with the second set of primary-level tracking-rules, where in case of non-match
• dynamically updating the first set of primary-level tracking-rules to the second set of primary-level tracking-rules.

7. The method according to any of the preceding claims, further comprising secondary-level tracking-rules that obey the primary-level tracking-rules and thus the tracking-rules that are legally compliant for the geographical area within which the logger device is located.

8. The method according to claim 6, wherein the secondary-level tracking-rules comprise customer specific tracking rules specified by the proprietor/customer or the nature of the asset, where the secondary-level tracking rules include:
• reducing tracking resolution when the logger device is within a pre-defined geofence around the second location, or
• stopping the tracking when the logger device is within a pre-defined geofence around the second location.

9. The method according to any of the preceding claims, wherein the primary-level tracking-rules that are legally compliant for the geographical area include the following rules:
no data may be processed,
data may be collected if an event is detected such as when package opening event or shock event,
data may be processed and/or collected if an event is detected,
data may be processed and/or collected if an event is detected during the real time monitoring and the country code and/or jurisdiction code may be received, where the data may be transmitted to an external computer system,
data may be processed and/or collected if an event is detected during the real time monitoring and the country code and/or jurisdiction code and a single cell tower ID may be received, where the data may be transmitted to an external computer system,
data may be processed and/or collected if an event is detected during the real time monitoring and the country code and/or jurisdiction code and a single cell tower ID and cell tower triangulation is allowed, where the data may be transmitted to an external computer system,
data may be processed and/or collected if an event is detected during the real time monitoring and the country code and/or jurisdiction code and a single cell tower ID and cell tower and Wi-Fi triangulation is allowed, where the data may be transmitted to an external computer system, and
data may be processed and/or collected if an event is detected during the real time monitoring and the country code and/or jurisdiction code and a single cell tower ID and cell tower and Wi-Fi triangulation is allowed and GPS coordinates, where the data may be transmitted to an external computer system.

10. The method according to any of preceding claims, wherein geographical area includes:
• boarders defining country via a country code, and/or
• boarders defining region via a region code, and/or
• county borders, and/or
• state borders, and/or
• boarders defined via geofence, and/or
• boarders defined around a postcode.

11. A system for scheduling a tracking profile of an asset while the asset is transported from a first location to a second location in real time using a logger device associated to the asset, comprising:
• a receiver for receiving a first location data indicating a first location of the logger device,
• a processor for utilizing the first location data for identifying a first geographical area in which the logger device is located,
• a memory having pre-stored first set of primary-level tracking-rules that are legally compliant for the first geographical area, and which define a communication pattern between the logger device and an external computer system during the real time tracking while the asset is transported from the first location to the second location,
wherein the processor is further configured to utilize the first location data for identifying the first set of primary-level tracking-rules that are legally compliant for the first geographical area.

12. The system according to claim 11, wherein the receiver, the memory and the processor are comprised in the logger device, and where the location data is transmitted from a cellular tower that is closest to the logger device.

13. The system according to claim 11, wherein the receiver, the processor and the memory are comprised in the external computer system, where the external computer system further comprises a transmitted for transmitting the identified first set of primary-level tracking-rules to the logger device.

14. The system according to any of the claims 13, wherein the processor is configured to operate the transmitter and the memory in accordance with the primary-level tracking-rules that are legally compliant for the first geographical area.

15. The system according to any of the claims 11 to 14, wherein the memory further has stored therein:
• a secondary-level tracking-rules that obey the primary-level tracking-rules and thus the tracking-rules that are legally compliant for the geographical area within which the logger device is located, and
• pre-defined geofence boundaries each of which have associated secondary-level tracking-rule selected from the secondary-level tracking-rules,
wherein the processor is further configured to, if the first location data is within the pre-defined geofence boundary selected from the pre-defined geofence boundaries, activate the associated secondary-level tracking-rule, and/or
• the memory has a pre-stored default tracking-rules, where prior to the start of the real time tracking of the asset the processor compares the identified tracking rules with the pre-stored default tracking-rules, where in case of a non-match the processor adjusts the pre-stored default tracking rules such that they match with the tracking rules that are legally compliant for the geographical area.
